# EUROPÄISCHE PATENTSCHRIFT

(11) **EP 2 281 666 B1**
(45) Veröffentlichungstag und Bekanntmachung des Hinweises auf die Patenterteilung: **17.01.2018**
(21) Anmeldenummer: 10006149.8
(22) Anmeldetag: 14.06.2010
(51) Int. Cl.: G01B 11/25, B25J 9/16, G05B 19/4069

(54) **Simulationsverfahren und -vorrichtung zur Vermessung eines Bauteils und Optimierung der realen entsprechenden Vermessung**
Simulation method and device for measuring a component and optimisation of the corresponding real measurement
Méthode et appareil pour simuler la mesure d'un objet et optimisation de la mesure réelle correspondante

(30) Priorität: 22.07.2009 DE 102009034244
(43) Veröffentlichungstag der Anmeldung: 09.02.2011
(73) Patentinhaber: KUKA Roboter GmbH, 86165 Augsburg (DE)
(72) Erfinder: Bernhard, Christian, 76135 Karlsruhe (DE); Bongardt, Thomas, 86179 Augsburg (DE); Haag, Michael, 76227 Karlsruhe (DE)
(74) Vertreter: Schlotter, Alexander Carolus Paul

(56) Entgegenhaltungen:
- EP-A2- 1 026 637
- EP-A2- 1 527 850
- EP-A2- 1 881 383
- US-B1- 6 249 285

## Beschreibung

Die vorliegende Erfindung betrifft ein Verfahren und eine Vorrichtung zur Vermessung eines Merkmals eines Bauteils mittels einer, insbesondere manipulatorgeführten, Erfassungseinrichtung.

Beispielsweise in der automatisierten Fertigung werden häufig Messsysteme eingesetzt, um Bauteile zu erkennen oder ihre Lage, Orientierung oder Abmessungen zu bestimmen. Hierzu werden zum Beispiel optische Messsysteme eingesetzt, bei denen ein Laser ein optisches Muster auf das Bauteil projiziert, das von einer Kamera aufgenommen wird. Durch Auswertung des Kamerabildes können Abstand, Orientierung und Abmessungen des Merkmals ermittelt werden. Die EP 1 524 492 B1 beschreibt eine solche dreidimensionale Bauteilvermessung mittels einer robotergeführten Projektor-Detektor-Einheit.

Dabei werden die Position von Projektor und Detektor sowie weitere Messparameter wie beispielsweise ein aufprojiziertes, zu erfassendes Muster bislang in der Regel manuell vor Ort eingerichtet. Dies ist nicht nur zeitaufwändig, sondern kann dazu führen, dass die Vermessung nicht optimal oder im Extremfall sogar nicht durchführbar ist, etwa, weil Sender bzw. Empfänger in keine geeignete Position gebracht werden können, keine Sicht auf das zu vermessende Merkmal haben oder dergleichen.

Die DE 20 2006 020 299 U1 schlägt hierzu vor, mehrere verschiedenartige 3D-Sensoren vorzusehen und den jeweils geeigneten auszuwählen. Aus der DE 10 2005 048 136 A1 ist bekannt, einen virtuellen TCP eines robotergeführten Lichtschnitt-Sensors durch Bewegen des Roboters in eine Messstelle eines Referenzmerkmals zu verfahren.

EP 1 026 637 A2 offenbart Vorrichtungen und Methoden zum Simulieren eines Sichtbasierten Inspektionssystems, durch das Merkmale von Fertigungsobjekten vermessen werden. Dabei werden graphische Modelle der zu vermessenden Objekte in einer virtuellen Welt und Modelle zur Beschreibung der Linsen-Effekte der Kamera eingesetzt.

EP 1 881 383 A2 offenbart eine Simulationsvorrichtung für ein Vermessungssystem auf Basis eines Robotersystems mit Kamera, um die Festlegung der passenden Position der Kamera sowie die Anpassung weiterer Erfassungsparameter zu ermöglichen und später auf das Vermessungssystem zu transferieren.

Die EP 1 527 850 A2 offenbart eine Simulationsvorrichtung für ein Vermessungssystem auf Basis eines Robotersystems mit Kamera, um off-line die optimale Position der Kamera zu identifizieren sowie die Anpassung weiterer Erfassungsparameter zu ermöglichen.

Die US 6,249,285 B1 offenbart ein Verfahren und eine Vorrichtung, um eine Kamerabasierte Vermessungseinrichtung zu konfigurieren. Das Verfahren wird iterativ durchgeführt, bis der Bediener nach seiner Einschätzung eine zuverlässige Abschätzung der Messleistung erhalten hat.

Aufgabe der vorliegenden Erfindung ist es, die Vermessung eines Merkmals eines Bauteils zu verbessern.

Diese Aufgabe wird durch ein Verfahren mit den Merkmalen des Anspruchs 1 gelöst. Anspruch 12 stellt eine Vorrichtung, Anspruch 13 bzw. 14 ein Computerprogramm bzw. ein Computerprogrammprodukt, insbesondere einen Datenträger oder ein Speichermedium, zur Durchführung eines Verfahrens nach Anspruch 1 unter Schutz. Die Unteransprüche betreffen vorteilhafte Weiterbildungen.

Erfindungsgemäß wird vorgeschlagen, ein virtuelles Modell des zu vermessenden Merkmals mittels eines virtuellen Modells einer Erfassungseinrichtung testweise virtuell zu vermessen, i.e. die Vermessung virtuell zu simulieren. Dies gestattet eine rasche, kostengünstige Prüfung, Absicherung oder Optimierung des Messprozesses. Das erfindungsgemäß verbesserte Vermessen eines Merkmals eines Bauteils, etwa einer geometrischen Kontur oder eines Musters aus unterschiedlich reflektierenden Bereichen, kann beispielsweise die Erfassung der Position, i.e. Lage und/oder Orientierung des Merkmals relativ zu der Erfassungseinrichtung bzw. einem Referenzsystem, die Erfassung seiner Form und/oder Abmessungen, die Erfassung einer Abweichung von einer Referenzkonfiguration oder dergleichen umfassen und zum Beispiel zur absoluten oder relativen Geometrievermessung von Bauteilen, zur Bauteilerkennung oder zur Führung eines Manipulators, insbesondere eines Roboters, etwa bei der Verfolgung von Schweißnähten, dem Ausrichten von Bauteilen bei der Montage oder dem Kalibrieren eines Manipulators verwendet werden.

Hierzu wird eine Messsituation mit einer Erfassungseinrichtung und dem Bauteil eingerichtet und das oder die Merkmale mit der Erfassungseinrichtung vermessen. Die Erfassungseinrichtung kann einen oder mehrere Sender aufweisen, insbesondere Sender zur Aussendung von elektromagnetischer Strahlung wie sichtbarem oder unsichtbarem, insbesondere ultravioletten, Licht, Röntgenstrahlung oder Funkwellen, wie sie in der Radar-Technologie verwendet werden. Zusätzlich oder alternativ können ein oder mehrere Sender zur Aussendung von Schall, insbesondere Ultraschall, vorgesehen sein. Dementsprechend kann die Erfassungseinrichtung einen oder mehrere Empfänger, insbesondere zum Empfangen solcher elektromagnetischer Strahlung, beispielsweise in Form einer oder mehrerer CCD- oder CMOS-Kameras oder optischer Positionssensoren ("Position Sensitive Detektor", PSD) bzw. zum Empfangen von Schall aufweisen.

Erfindungsgemäß projizieren ein oder mehrere Sender ein Muster, beispielsweise einen Punkt, einen Strich, ein Rechteck, eine andere geometrische Figur oder dergleichen auf das Merkmal, etwa, indem ein Laser durch Ablenkung, Blenden oder dergleichen ein entsprechendes optisches Muster aufstrahlt. Ein oder mehrere Empfänger nehmen ein Bild auf, in dem eine Bildauswertung, insbesondere eine Bilderkennung, das reflektierte oder komplementäre Muster erfasst und aus der Abbildung des Musters beispielsweise Position, Form, Abmessungen, Abweichung des Merkmals von einer Referenzkonfiguration oder dergleichen bestimmt. Vorzugsweise kann eine Triangulation, insbesondere eine Lichtlinien- bzw. Lichtschnitt-Triangulation eingesetzt werden. Aber auch ein Scannen, bei dem zum Beispiel ein oder mehrere Punkte, vorzugsweise eine dreidimensionale Punktwolke, auf das Merkmal projiziert werden, oder das Abtasten des Merkmals mittels Radarstrahlen, Schallwellen oder dergleichen kann eingesetzt werden, um das Merkmal zu vermessen.

Als Messsituation wird insbesondere die Konfiguration der Erfassungseinrichtung sowie die Konstellation zwischen Erfassungseinrichtung und Bauteil bzw. Merkmal bezeichnet. Dementsprechend kann das Einrichten der Messsituation insbesondere das Einrichten der Erfassungseinrichtung, des Bauteils und/oder der Messumgebung, beispielsweise der Umgebungshelligkeit bzw. -beleuchtung umfassen.

Dementsprechend kann das Einrichten insbesondere ein Positionieren der Erfassungseinrichtung und/oder des Merkmals relativ zueinander umfassen. Hierbei können Bauteil, Sender und/oder Empfänger jeweils stationär oder beweglich, insbesondere manipulatorgeführt sein. So kann etwa bei stationärem Bauteil ein Sender an einem Glied, insbesondere dem Werkzeugflansch, eines Manipulators angeordnet und durch diesen in eine vorgegebene Lage, definiert etwa durch kartesische Koordinaten in einem umgebungs- oder manipulatorfesten Referenzsystem, und/oder vorgegebene Orientierung gebracht werden, die beispielsweise durch EULER- oder KARDAN-Winkel relativ zu dem Referenzsystem beschrieben werden kann. Ein stationärer Empfänger kann dann so ausgerichtet, beispielsweise verschoben und/oder verdreht, werden, dass er das von dem Sender projizierte und vom Merkmal reflektierte Muster erfasst. Analog kann ein Empfänger an einem Glied des Manipulators angeordnet und durch diesen in eine vorgegebene Position gebracht werden, um ein Muster aufzunehmen, das vom Sender auf das Merkmal projiziert und von diesem wenigstens teilweise reflektiert wird. In einer bevorzugten Ausführung umfasst die stationäre oder bewegliche, insbesondere manipulatorgeführte Erfassungseinrichtung sowohl wenigstens einen Sender als auch wenigstens einen Empfänger, beispielsweise in Form eines Laser-, Radar- oder Schallkopfes und eines entsprechenden Detektors, etwa in Form einer Kamera, die gemeinsam relativ zu dem Merkmal positioniert und gegebenenfalls gegeneinander verschoben und/oder verdreht werden können. Das Einrichten der Erfassungseinrichtung kann dann das Positionieren der beispielsweise an einem Glied, insbesondere einem Werkzeugflansch, eines Manipulators befestigten Erfassungseinrichtung relativ zu dem Merkmal und/oder das Verschieben bzw. Verdrehen von Sender und Empfänger gegeneinander umfassen.

Zusätzlich oder alternativ kann das Einrichten auch die Vorgabe von Messparameter der Erfassungseinrichtung umfassen. Messparameter können beispielsweise das projizierte Muster, insbesondere dessen Form, Größe und/oder Orientierung, die Art, Intensität, Frequenz und/oder Leistung der Strahlung, die Art, Genauigkeit oder Methode einer Bildauswertung oder dergleichen umfassen.

Das virtuelle Modell der Erfassungseinrichtung beschreibt vorzugsweise eine oder mehrere, bevorzugt alle für die Vermessung wesentlichen, Eigenschaften bzw. Funktionen der Erfassungseinrichtung. Beispielsweise kann es geometrische Abmessungen der Erfassungseinrichtung, Einrichtmöglichkeiten, insbesondere Positioniermöglichkeiten, Achsen von Sender und/oder Empfänger, etwa optische Achsen eines Lasers bzw. einer Kamera, und/oder weitere Strahlungsgrößen wie Brennpunkte, Abbildungsebenen, Blenden, Aperturen, Verzerrungen oder dergleichen in Abhängigkeit von einer Position und/oder Messparametern beschreiben. In einer bevorzugten Ausführung wird das virtuelle Modell der Erfassungseinrichtung automatisch mit der realen Erfassungseinrichtung abgeglichen, etwa, indem Einstellungen, die an einer von der virtuellen und der realen Erfassungseinrichtung vorgenommen werden, an die andere von der virtuellen und der realen Erfassungseinrichtung übertragen werden.

Das virtuelle Modell des Merkmals beschreibt entsprechend vorzugsweise eine oder mehrere, bevorzugt alle für die Vermessung wesentlichen, Eigenschaften des Merkmals. Es kann beispielsweise wiederum geometrische Abmessungen des Merkmals, seine Struktur, Oberflächeneigenschaften wie etwa seine Farbe, und insbesondere Strahlungsgrößen wie beispielsweise Reflektionseigenschaften, etwa Reflektions- und/oder Absorptionsgrade, Brechzahlen, Polarisation oder dergleichen beschreiben.

Ein virtuelles Modell kann manuell oder automatisch erstellt werden, beispielsweise aus einem Katalog vorgegebener Modelle ausgewählt werden. Vorzugsweise wird das verwendete virtuelle Modell der Erfassungseinrichtung bzw. des Merkmals automatisch in Abhängigkeit der verwendeten Erfassungseinrichtung bzw. des zu vermessenden Merkmals vorgegeben.

Eine virtuelle Vermessung simuliert entsprechend die Vermessung des (virtuellen) Merkmals durch die (virtuelle) Erfassungseinrichtung. Insbesondere kann das virtuelle Vermessen eine simulierte Bildaufnahme eines durch die virtuelle Erfassungseinrichtung erfassten Bildes eines von dem virtuellen Merkmal reflektierten Musters umfassen. In einer bevorzugten Ausführung wird das von der virtuellen Erfassungseinrichtung erfasste virtuelle, i.e. simulierte Signal, beispielsweise ein virtuelles Bild eines Musters, mit einer auch bei der tatsächlichen bzw. realen Erfassungseinrichtung eingesetzten Signalverarbeitung, zum Beispiel einer Bildauswertung, verarbeitet. Auf diese Weise können Abweichungen zwischen der simulierten und der realen Signalverarbeitung vermieden werden. Zudem steht die reale Signalverarbeitung in der Regel bereits zur Verfügung, was den, insbesondere softwaretechnischen, Aufwand für die virtuelle Vermessung verringert.

Um die Aussagefähigkeit und Genauigkeit zu erhöhen, können beim virtuellen Vermessen Störeinflüsse auf den Messprozess berücksichtigt werden. Beispielsweise kann störendes Fremdlicht, Reflexionen am Bauteil oder anderen Oberflächen, weitere Bauteile, Bauteilmerkmale oder Umgebungselemente wie beispielsweise Manipulatorglieder, die das Merkmal abschatten oder eine Positionierung der Erfassungseinrichtung behindern, Farbfehler, sphärische Fehler, Bildfeldwölbungen, Verzeichnungen, Beschädigungen oder Verschmutzungen von Erfassungseinrichtung und/oder Bauteilmerkmal, und dergleichen, bei dem testweisen virtuellen Vermessen mit simuliert werden.

Auf Basis des virtuellen Vermessens kann dann das Einrichten der Messsituation, insbesondere der Erfassungseinrichtung, und/oder das Vermessen des Merkmals erfolgen. Beispielsweise können Position und/oder Messparameter, die in der Simulation überprüft wurde, manuell oder automatisch für die reale Erfassungseinrichtung übernommen werden. Insbesondere können so bei manipulatorgeführten Erfassungseinrichtungen Messbahnen für den Manipulator generiert bzw. geplant werden.

Nach einer Ausführung der vorliegenden Erfindung dient die Simulation der Überprüfung vorgegebener Parameter für die Erfassungseinrichtung und/oder den Messprozess, etwa eines manuell geplanten Messprozesses mit vorgegebenen Randbedingungen, wie sie etwa bei stationären Erfassungseinrichtungen vorliegen können. In einer bevorzugten Ausführung werden jedoch verschiedene Positionen und/oder Messparameter für die Erfassungseinrichtung und/oder verschiedene weitere Parameter, beispielsweise Umgebungsbeleuchtungsbedingungen und dergleichen, für den Messprozess variiert, jeweils ein virtuelles Vermessen durchgeführt und dieses, etwa in Form einer Gütefunktion, bewertet, um so die Vermessung, vorzugsweise offline vorab, zu optimieren.

Erfindungsgemäß wird ein virtuelles Modell der Erfassungseinrichtung eingerichtet und mit ihm testweise virtuell, i.e. simuliert ein virtuelles Modell des Merkmals vermessen. Dies kann während des tatsächlichen Einrichtens der realen Messsituation und/oder des tatsächlichen Vermessens des realen Merkmals erfolgen. In einer bevorzugten Ausführung wird es offline vorab im Rahmen einer Simulation durchgeführt.

Vorliegend wurde darauf Bezug genommen, dass die Erfassungseinrichtung manipulatorgeführt positioniert werden kann. Da es bei der Vermessung jedoch wesentlich auf die Position von Erfassungseinrichtung und zu vermessendem Bauteil relativ zueinander ankommt, kann zusätzlich oder alternativ auch das Bauteil manipulatorgeführt positioniert werden. Dementsprechend können auch bei der Simulation Erfassungseinrichtungs- und/oder Bauteilmodell in einer virtuellen Umgebung positioniert werden, um so beispielsweise sowohl die optimale Pose eines die Erfassungseinrichtung tragenden Manipulators, insbesondere eines Industrieroboters, als auch die optimale Messposition des Bauteils, etwa auf einem Drehtisch, zu bestimmen. Dementsprechend kann das Einrichten der Messsituation die Wahl bzw. Vorgabe der Position von Erfassungseinrichtung und zu vermessendem Bauteil relativ zueinander umfassen.

Weitere Vorteile und Merkmale ergeben sich aus den Unteransprüchen und den Ausführungsbeispielen. Hierzu zeigt, teilweise schematisiert:
- Fig. 1:: eine ungünstige Messsituation;
- Fig. 2:: eine nach einer Ausführung der vorliegenden Erfindung optimierte Messsituation; und
- Fig. 3:: den Ablauf eines erfindungsgemäßen Verfahrens.

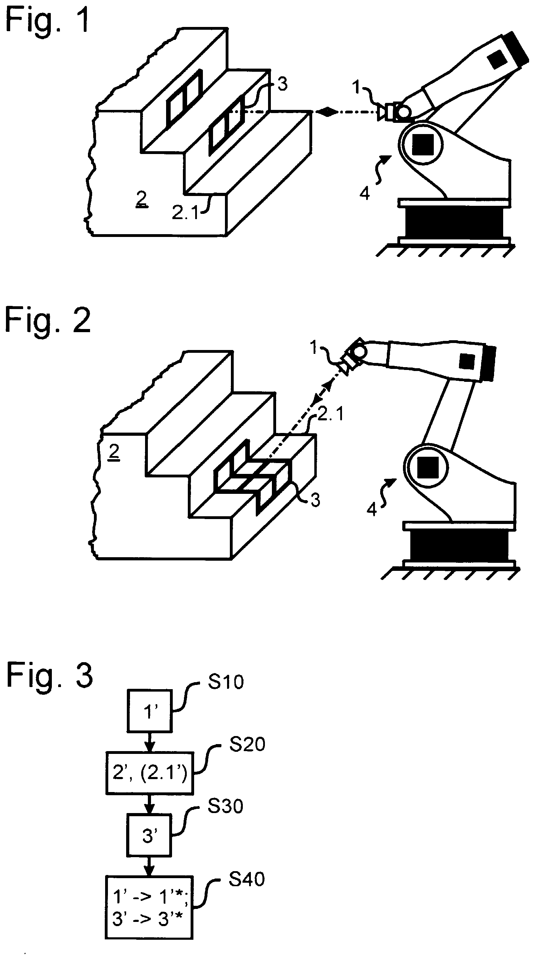

Fig. 1, 2 zeigen einen sechsachsigen Industrieroboter 4, der an seinem Werkzeugflansch eine Erfassungseinrichtung in Form eines Sender-Empfänger-Kopfes 1 mit einem Laser und einer CCD-Kamera trägt. Der Laser sendet einen durch eine entsprechende Optik aufgefächerten Lichtvorhang aus, um verschiedene optische Muster 3 auf eine Fläche zu projizieren, im Ausführungsbeispiel etwa ein Rechteck mit einbeschriebenem Mittelkreuz (vgl. Fig. 2).

Mit der Erfassungseinrichtung 1 soll ein Merkmal in Form eines Absatzes 2.1 eines stufenförmigen Bauteils 2 vermessen werden.

Fig. 1 zeigt als Ausgangssituation eine ungünstige Messsituation zwischen dem stationären Bauteil 2, dessen Position relativ zur Roboterbasis vorgegeben ist, und der Erfassungseinrichtung 1. Man erkennt, dass das optische Muster 3 nicht optimal ist, um den Absatz 2.1 zu vermessen, da der strichpunktiert angedeutete Laserstrahl im Wesentlichen parallel zum Absatz 2.1 verläuft, das Mittelkreuz auf Höhe der Absatzkante liegt und der Absatz 2.1 somit nicht beleuchtet wird.

Fig. 3 zeigt den Ablauf eines erfindungsgemäßen Verfahrens. Zunächst wird eine virtuelle Messsituation eingerichtet, i.e. die vorstehend erläuterte reale Messsituation in einer virtuellen Umgebung abgebildet. Hierzu wird in einem Schritt S10 ein virtuelles Modell 1' der Erfassungseinrichtung 1 eingerichtet, das die wesentlichen Funktionen des Sender-Empfänger-Kopfes 1 beschreibt, etwa das von ihm ausgestrahlte Muster 3' in Abhängigkeit seiner Position relativ zur Projektionsfläche. In einem Schritt S20 wird entsprechend ein virtuelles Modell 2.1' des Merkmals 2.1 des Bauteils 2 eingerichtet, das dessen wesentliche Eigenschaften abbildet, etwa die Reflektion eines aufgestrahlten Musters. Die virtuellen Modelle können beispielsweise vom Anwender aus einer Modellbibliothek ausgewählt und entsprechend konfiguriert werden. Gleichermaßen ist es möglich, die Modelle automatisch, beispielsweise anhand des angeflanschten und von der Vorrichtung zur Vermessung erkannten Sender-Empfänger-Kopfes 1 automatisch auszuwählen. Als Grundposition der virtuellen Erfassungseinrichtung 1' kann beispielsweise die Position vorgegeben werden, die einer Null- oder Referenzpose des Roboters 4 entspricht.

Dann wird in einer Simulation das Merkmalmodell 2.1' mit dem Erfassungseinrichtungsmodell 1' virtuell vermessen. Hierzu wird das Bild des Musters 3' simuliert, das die Kamera bei der virtuellen Messsituation, i.e. Position von Erfassungseinrichtungs- und Bauteilmodell 1', 2' zueinander, virtuell ausgestrahltem Muster 3' etc. aufnimmt. Dieses Bild wird mit der auch beim realen Messprozess eingesetzten Bildauswertesoftware ausgewertet (Schritt S30).

Das Ergebnis der Bildauswertung wird mit einer Gütefunktion bewertet, die beispielsweise berücksichtigt, ob und wie viel des zu vermessenden Merkmals 2.1' mit dem Muster 3' bestrichen wird, welcher Anteil des Laserstrahls in die CCD-Kamera zurückreflektiert wird, wie genau die erfasste Geometrie des virtuellen Merkmals mit dessen Modellparametern übereinstimmt oder dergleichen. Vorzugsweise wird ein gemischtes Gütekriterium als, bevorzugt gewichtete, Summe mehrerer Einzelkriterien bewertet.

Im Anschluss wird die Messsituation variiert, indem beispielsweise der virtuelle Sender-Empfänger-Kopf 1' in einer andere Position relativ zu dem Bauteilmodell 2' angeordnet und/oder das abgestrahlte Muster 3' variiert, beispielsweise vergrößert wird. Auf diese Weise werden durch einen Optimierer gezielt Parameter des Messprozesses, insbesondere die Position des Erfassungseinrichtungsmodells 1' und die Größe des virtuellen optischen Musters 3', verändert, bis die Gütefunktion eine ausreichend gute, dann als optimal definierte Messsituation anzeigt.

Zusätzlich wird in der Simulation der Einfluss der Umgebungshelligkeit, beispielsweise von Störlichtern, berücksichtigt, indem dies bei der Bestimmung des simulierten Bildes des Musters 3' berücksichtigt wird, das die Kamera bei der virtuellen Messsituation virtuell aufnimmt. Dementsprechend kann beispielsweise eine optimale Umgebungshelligkeit ermittelt oder das aufzustrahlende Muster 3', insbesondere seine Form, Größe oder die Laserleistung an die Umgebungsbedingungen angepasst werden. In einer nicht dargestellten Abwandlung kann auch die Art der Erfassungseinrichtung variiert werden. Beispielsweise kann zu einem virtuellen Ultraschall-Sender-Empfänger-Kopf gewechselt werden, wenn festgestellt wird, dass aufgrund der unveränderbaren Umgebungshelligkeit eine optische Vermessung nicht durchführbar ist.

In der Simulation wird auch die Bewegungsmöglichkeit des Roboters 4 berücksichtigt. Beispielsweise ist ein weiteres Absenken der virtuellen Empfangseinrichtung 1' vertikal nach unten in der in Fig. 1 dargestellten Messsituation in der Simulation ausgeschlossen, da dies zu einer Selbstkollision der Schwinge mit dem Karussell des Roboters 4 führen würde.

Die solcherart gefundenen optimalen Parameter, insbesondere die Position und Laserleistung der optimalen virtuellen Erfassungseinrichtung 1'* sowie das optimale optische Muster 3'* werden an eine Steuerung des Roboters 4 übertragen, die zur Vermessung des realen Bauteils 2 die in Fig. 2 dargestellte optimale Messsituation einrichtet, indem sie den Sender-Empfänger-Kopf 1' in eine Position bringt, in der dieser den Absatz 2.1 mit einem geeignet großen und kontrastreichen Muster 3 bestrahlt.

### Bezugszeichenliste

- 1('): (virtueller) Sender-Empfänger-Kopf (Erfassungseinrichtung)
- 2('): (virtuelles) Bauteil
- 2.1('): (virtueller) Absatz (Merkmal)
- 3('): (virtuelles) Muster
- 4: Industrieroboter (Manipulator)

## Patentansprüche

1. Verfahren zur Vermessung eines Merkmals (2.1) eines Bauteils (2), mit den Schritten:
a) Einrichten einer Messsituation mit einer Erfassungseinrichtung (1) und dem Bauteil (2);
b) Vermessen des Merkmals (2.1) mit der Erfassungseinrichtung;
c) Einrichten (S10, S20) einer virtuellen Messsituation mit einem virtuellen Modell (1') der Erfassungseinrichtung (1) und einem virtuellen Modell (2.1') des Merkmals (2.1); und
d) virtuelles Vermessen (S30) des Merkmalmodells (2.1') mit dem Erfassungseinrichtungsmodell (1'), **dadurch gekennzeichnet, dass** das virtuelle Vermessen eine virtuelle Bildaufnahme (S30) eines von dem virtuellen Merkmal (2.1') reflektierten und durch die virtuelle Erfassungseinrichtung (1') erfassten Bildes eines von dem virtuellen Merkmal (2.1') reflektierten Musters (3') umfasst, wobei das reflektierte Muster (3') von mindestens einem Sender virtuell auf das virtuelle Merkmal (2.1') aufgestrahlt wird.

2. Verfahren nach einem der vorhergehenden Ansprüche, **dadurch gekennzeichnet, dass** das Einrichten der Messsituation und/oder das Vermessen des Merkmals (2.1) auf Basis des virtuellen Vermessens erfolgt.

3. Verfahren nach einem der vorhergehenden Ansprüche, **dadurch gekennzeichnet, dass** das Einrichten ein Positionieren von Erfassungseinrichtung (1) und Merkmal (2.1) relativ zueinander bzw. von Erfassungseinrichtungsmodell (1') und virtuellem Modell (2.1') des Merkmals (2.1) relativ zueinander umfasst.

4. Verfahren nach einem der vorhergehenden Ansprüche, **dadurch gekennzeichnet, dass** das Einrichten die Vorgabe von Messparametern der Erfassungseinrichtung (1) bzw. des Erfassungseinrichtungsmodell (1') umfasst.

5. Verfahren nach einem der vorhergehenden Ansprüche, **dadurch gekennzeichnet, dass** die Schritte c) und/oder d) wiederholt werden, wobei Parameter des Messprozesses, insbesondere eine Position und/oder Messparameter des Erfassungseinrichtungsmodells, variiert, insbesondere optimiert (S40), werden.

6. Verfahren nach einem der vorhergehenden Ansprüche, **dadurch gekennzeichnet, dass** die Erfassungseinrichtung (1) bzw. das Erfassungseinrichtungsmodell (1') wenigstens einen Sender, insbesondere zur Aussendung von elektromagnetischer Strahlung, vorzugsweise Licht oder Funkwellen, und/oder Schall aufweist.

7. Verfahren nach einem der vorhergehenden Ansprüche, **dadurch gekennzeichnet, dass** die Erfassungseinrichtung (1) bzw. das Erfassungseinrichtungsmodell (1') wenigstens einen Empfänger, insbesondere zum Empfangen von elektromagnetischer Strahlung, vorzugsweise Licht oder Funkwellen, und/oder Schall aufweist.

8. Verfahren nach einem der vorhergehenden Ansprüche, **dadurch gekennzeichnet, dass** das Vermessen bzw. virtuelle Vermessen eine Bildauswertung umfasst.

9. Verfahren nach einem der vorhergehenden Ansprüche, **dadurch gekennzeichnet, dass** das virtuelle Merkmalmodell (2.1') Oberflächeneigenschaften des Merkmals (2.1), insbesondere Farbe, Struktur und/oder Reflektionsgrad beschreibt.

10. Verfahren nach einem der vorhergehenden Ansprüche, **dadurch gekennzeichnet, dass** das virtuelle Vermessen Störeinflüsse, insbesondere Fremdlicht, Reflexionen, weitere Bauteile oder Bauteilmerkmale, berücksichtigt.

11. Verfahren nach einem der vorhergehenden Ansprüche, **dadurch gekennzeichnet, dass** die Erfassungseinrichtung (1), das virtuelle Erfassungseinrichtungsmodell (1'), das zu vermessende Bauteil (2) und/oder das virtuelle Bauteilmodell (2') automatisch, insbesondere manipulatorgeführt, positioniert werden.

12. Vorrichtung zur Vermessung eines Merkmals (2.1) eines Bauteils (2) mittels einer zur Vorrichtung gehörigen, insbesondere manipulatorgeführten, Erfassungseinrichtung (1),
**gekennzeichnet durch**
eine Simulationseinrichtung, die zur Durchführung eines Verfahrens nach einem der vorhergehenden Ansprüche eingerichtet ist.

13. Computerprogramm, das ein Verfahren nach einem der Ansprüche 1 bis 11 ausführt, wenn es in einer Simulationseinrichtung nach Anspruch 12 abläuft.

14. Computerprogrammprodukt mit Programmcode, der auf einem maschinenlesbaren Träger gespeichert ist und ein Computerprogramm nach Anspruch 13 umfasst.

## Claims

1. A method of measuring a feature (2.1) of a component (2), comprising the steps of:
a) setting up of a measurement situation with a detection device (1) and the component (2);
b) measuring the feature (2.1) with the detection device;
c) setting up (S10, S20) of a virtual measurement situation with a virtual model (1') of the detection device (1) and a virtual model (2.1') of the feature (2.1); and
d) virtual measuring (S30) of the feature model (2.1') with the detection device model (1'), **characterized in that** the virtual measuring comprises a virtual image acquisition (S30) of an image of a pattern (3') reflected by the virtual feature (2.1'), which image has been reflected by the virtual feature (2.1') and detected by the virtual detection device (1'), wherein the reflected pattern (3') is virtually projected onto the virtual feature (2.1') by at least one transmitter.

2. The method according to any one of the preceding claims, **characterized in that** the setting up of the measurement situation and/or the measuring of the feature (2.1) is carried out on the basis of the virtual measurement.

3. The method according to any one of the preceding claims, **characterized in that** the setting up comprises a positioning of the detection device (1) and the feature (2.1) relative to each other, or of the detection device model (1') and the virtual model (2.1') of the feature (2.1) relative to each other.

4. The method according to any one of the preceding claims, **characterized in that** the setting up comprises the specification of measurement parameters of the detection device (1) or the detection device model (1').

5. The method according to any one of the preceding claims, **characterized in that** the steps c) and/or d) are repeated, wherein parameters of the measuring process, in particular a position and/or measuring parameters of the detection device model, are varied, in particular optimized (S40).

6. The method according to any one of the preceding claims, **characterized in that** the detection device (1) or the detection device model (1') comprises at least one transmitter, in particular for transmitting electromagnetic radiation, preferably light or radio waves, and/or sound.

7. The method according to any one of the preceding claims, **characterized in that** the detection device (1) or the detection device model (1') comprises at least one receiver, in particular for receiving electromagnetic radiation, preferably light or radio waves, and/or sound.

8. The method according to any one of the preceding claims, **characterized in that** the measuring or virtual measuring comprises an image evaluation.

9. The method according to any one of the preceding claims, **characterized in that** the virtual feature model (2.1') describes surface properties of the feature (2.1), in particular color, structure and/or reflectance.

10. The method according to any one of the preceding claims, **characterized in that** the virtual measuring takes into account interference, in particular extraneous light, reflections or other components or component features.

11. The method according to any one of the preceding claims, **characterized in that** the detection device (1), the virtual detection device model (1'), the component (2) to be measured and/or the virtual component model (2') are positioned automatically, in particular guided by a manipulator.

12. An apparatus for measuring a feature (2.1) of a component (2) by means of a detection device (1) associated with the apparatus, in particular guided by a manipulator, **characterized by**
a simulation device, which is set up for carrying out a method according to any one of the preceding claims.

13. A computer program that executes a method according to any one of claims 1 to 11 when it runs on a simulation device according to claim 12.

14. A computer program product with program code stored on a machine-readable medium and comprising a computer program according to claim 13.

## Revendications

1. Procédé de mesure d'une caractéristique (2.1) d'un composant (2), avec les étapes de :
a) mise en place d'une situation de mesure avec un équipement de détection (1) et le composant (2) ;
b) mesure de la caractéristique (2.1) avec l'équipement de détection ;
c) mise en place (S10, S20) d'une situation de mesure virtuelle avec un modèle virtuel (1') de l'équipement de détection (1) et un modèle virtuel (2.1') de la caractéristique (2.1) ; et
d) mesure virtuelle (S30) du modèle de caractéristique (2.1') avec le modèle d'équipement de détection (1'),
**caractérisé en ce que** la mesure virtuelle comprend une prise d'image virtuelle (S30) d'une image reflétée par la caractéristique virtuelle (2.1') et détectée par l'équipement de détection virtuel (1') d'un motif (3') reflété par la caractéristique virtuelle (2.1'), dans lequel le motif reflété (3') est appliqué virtuellement par au moins un émetteur sur la caractéristique virtuelle (2.1').

2. Procédé selon l'une quelconque des revendications précédentes, **caractérisé**
**en ce que** la mise en place de la situation de mesure et/ou la mesure de la caractéristique (2.1) se fait sur la base de la mesure virtuelle.

3. Procédé selon l'une quelconque des revendications précédentes, **caractérisé en ce que** la mise en place comprend un positionnement de l'équipement de détection (1) et de la caractéristique (2.1) l'un par rapport à l'autre ou du modèle d'équipement de détection (1') et du modèle virtuel (2.1') de la caractéristique (2.1) l'un par rapport à l'autre.

4. Procédé selon l'une quelconque des revendications précédentes, **caractérisé en ce que** la mise en place comprend la prescription de paramètres de mesure de l'équipement de détection (1) ou du modèle d'équipement de détection (1').

5. Procédé selon l'une quelconque des revendications précédentes, **caractérisé en ce que** les étapes c) et/ou d) sont répétées, les paramètres du processus de mesure, en particulier une position et/ou des paramètres de mesure du modèle d'équipement de détection sont modifiés, en particulier optimisés (S40).

6. Procédé selon l'une quelconque des revendications précédentes, **caractérisé en ce que** l'équipement de détection (1) ou le modèle d'équipement de détection (1') présente au moins un émetteur, en particulier pour l'émission de rayonnement électromagnétique, de préférence de lumière ou d'ondes radio, et/ou de son.

7. Procédé selon l'une quelconque des revendications précédentes, **caractérisé en ce que** l'équipement de détection (1) ou le modèle d'équipement de détection (1') présente au moins un récepteur, en particulier pour la réception de rayonnement électromagnétique, de préférence de lumière ou d'ondes radio, et/ou de son.

8. Procédé selon l'une quelconque des revendications précédentes, **caractérisé en ce que** la mesure ou la mesure virtuelle comprend une évaluation d'image.

9. Procédé selon l'une quelconque des revendications précédentes, **caractérisé en ce que** le modèle de caractéristique virtuel (2,1') décrit des propriétés de surface de la caractéristique (2.1), en particulier la couleur, la structure et/ou la réflectance.

10. Procédé selon l'une quelconque des revendications précédentes, **caractérisé en ce que** la mesure virtuelle tient compte d'interférences, en particulier la lumière externe, les réflexions, d'autres composants ou caractéristiques de composant.

11. Procédé selon l'une quelconque des revendications précédentes, **caractérisé en ce que** l'équipement de détection (1), le modèle d'équipement de détection virtuel (1'), le composant à mesurer (2) et/ou le modèle de composant virtuel (2') sont positionnés automatiquement, en particulier guidés par manipulateur.

12. Dispositif de mesure d'une caractéristique (2.1) d'un composant (2) au moyen d'un équipement de détection (1) appartenant au dispositif, en particulier guidé par manipulateur,
**caractérisé par**
un équipement de simulation, qui est aménagé pour la réalisation d'un procédé selon l'une quelconque des revendications précédentes.

13. Programme informatique, qui réalise un procédé selon l'une quelconque des revendications 1 à 11, lorsqu'il se déroule dans un équipement de simulation selon la revendication 12.

14. Produit programme informatique avec code de programme, qui est enregistré sur un support lisible par machine et comprend un programme informatique selon la revendication 13.
